# EUROPÄISCHE PATENTANMELDUNG

(11) **EP 1 221 349 A2**
(43) Veröffentlichungstag der Anmeldung: **10.07.2002**
(21) Anmeldenummer: 02000362.0
(22) Anmeldetag: 25.04.1997
(51) Int. Cl.: B23B 29/034

(54) **Werkzeugkopf für den Einsatz in Werkzeugmaschinen**

(30) Priorität: 03.05.1996 DE 19617899
(62) Teilanmeldung aus: 97921763.5
(71) Anmelder: KOMET Präzisionswerkzeuge Robert Breuning GmbH, D-74354 Besigheim (DE)
(72) Erfinder: Scheer, Gerhard, 74369 Löchgau (DE); Feil, Erich, 74382 Neckarwestheim (DE); Hörl, Roland, 74357 Bönnigheim (DE)
(74) Vertreter: Wolf, Eckhard, Dr.-Ing.

(57) **Zusammenfassung**

Die Erfindung bezieht sich auf einen Werkzeugkopf für den Einsatz in Werkzeugmaschinen. Der Werkzeugkopf weist einen Grundkörper (10), einen axial über den Grundkörper (10) überstehenden, mit einer Maschinenspindel kuppelbaren Werkzeugschaft (28), mindestens einen im wesentlichen quer zur Grundkörperachse verstellbaren, eine stirnseitig überstehende Werkzeugaufnahme aufweisenden Arbeitsschieber (16) und einen im Grundkörper angeordneten, über Getriebemittel (22) in Verstellrichtung auf den Arbeitsschieber (16) einwirkenden Verstellmotor (24) auf. Um auch bei hohen Belastungsspitzen einen vibrationsfreien Betrieb zu gewährleisten, wird gemäß der Erfindung vorgeschlagen, daß der Arbeitsschieber (16) in einer grundkörperfesten, spielfrei gestellten Wälzführung (52,54,58) geführt ist, daß die Wälzführung begrenzt elastisch verformbar ist und daß zusätzlich eine bei Erreichen der elastischen Verformungsgrenze wirksam werdende Gleitführung (56) für den Arbeitsschieber (16) vorgesehen ist.

## Beschreibung

Die Erfindung betrifft einen Werkzeugkopf für den Einsatz in Werkzeugmaschinen der im Oberbegriff des Anspruchs 1 angegebenen Gattung.

Es ist ein Werkzeugkopf ähnlicher Art bekannt (DE-A-4330822), bei welchem der Verstellmotor mit seinem im wesentlichen zylindrischen Motorgehäuse in einer quer zur Grundkörperachse ausgerichteten, die Grundkörperachse schneidenden Querausnehmung des Grundkörpers mit parallel zur Querausnehmung ausgerichteter Abtriebswelle angeordnet ist. Für den Antrieb des Arbeitsschiebers sind Getriebemittel vorgesehen, die ein auf der Abtriebswelle des Motors angeordnetes Zahnrad, ein mit dem Zahnrad kämmendes Antriebsritzel und eine starr mit diesem verbundene Gewindespindel aufweisen. Auf der Gewindespindel ist ein Gleitstein mit einer Schrägverzahnung geführt, die mit einer komplementären Schrägverzahnung eines am Schieber angeordneten Gegenstücks kämmt. Die Getriebemittel sind dort außermittig im Grundkörper angeordnet. Auf der Seite des Werkzeugschaftes ist ein ringförmiges Spulengehäuse angeordnet, in welchem sich eine Sekundärspule mit zugehöriger Stabilisierungselektronik befindet, die Bestandteil einer induktiven Übertragungsstrecke einer Stromversorgungseinrichtung für den Verstellmotor und die im Werkzeugkopf enthaltenen Elektronikschaltungen ist. Grundsätzlich ist es möglich, die Induktionsstrecke auch zur bidirektionalen Datenübertragung zu verwenden, wobei die Datensignale dem Induktionsstrom aufmoduliert werden. Die Primärspule der induktiven Übertragungsstrecke befindet sich in einem maschinenseitigen Spulengehäuse, das radial außerhalb des Werkzeugschafts in den freien Zwischenraum zwischen der Stirnfläche der Maschinenspindel und der Stirnfläche des werkzeugkopfseitigen Spulengehäuses eingreift. Die fliehkraftfreie Anordnung des Verstellmotors und des Getriebes im Werkzeugkopf ist bisher noch nicht befriedigend gelöst. Auch die Baugröße und die Montage- und Wartungsfreundlichkeit des bekannten Werkzeugkopfes lassen zu wünschen übrig.

Der Erfindung liegt die Aufgabe zugrunde, einen Werkzeugkopf der eingangs angegebenen Art zu entwickeln, der auch bei hohen Belastungsspitzen einen vibrationsfreien Betrieb gewährleistet.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht vor allem darin, daß der Arbeitsschieber in einer grundkörperfesten, spielfrei gestellten, vorzugsweise prismenförmigen Wälzführung geführt ist, daß die Wälzführung begrenzt elastisch verformbar ist und daß zusätzlich eine bei Erreichen der elastischen Verformungsgrenze wirksam werdende Gleitführung für den Arbeitsschieber vorgesehen ist. Mit diesen Maßnahmen wird auch bei geringer Reibung eine hohe Stellgenauigkeit erzielt. Weiter wird mit den erfindungsgemäßen Maßnahmen berücksichtigt, daß die Wälzführung durch die angreifenden Schneidkräfte trotz Vorspannung einer Momentenbelastung und Biegeverformung unterworfen ist. Mit den erfindungsgemäßen Maßnahmen wird eine Verbesserung des Dämpfungsverhaltens auch bei hohen Belastungsspitzen erzielt. Zum anderen wird gewährleistet, daß sich an den Führungsrollen und am Schieber keine bleibenden Verformungen bilden können. Grundsätzlich ist es möglich, auch den Ausgleichsschieber in einer grundkörperfesten Wälzführung anzuordnen.

Zur Erhöhung der Verstellgenauigkeit ist es von Vorteil, wenn der Arbeitsschieber und das Antriebsritzel in ihrer Wirkverbindung spielfrei gestellt werden. Um dies zu erreichen, wird gemäß der Erfindung vorgeschlagen, daß die Getriebemittel eine konzentrisch zur Grundkörperachse drehbare Ausgangswelle aufweisen, die ein mit einer arbeitsschieberseitigen, vorzugsweise arbeitsschieberfesten Verzahnung kämmendes Antriebsritzel trägt und die arbeitsschieberfeste Zahnplatte oder das Ritzel in zwei axial getrennte, relativ zueinander verschieb- oder verdrehbare und starr miteinander verbindbare Verzahnungsteile unterteilt ist.

Um eine hohe Montage- und Wartungsfreundlichkeit zu erzielen, wird gemäß einer bevorzugten Ausgestaltung der Erfindung vorgeschlagen, daß der Grundkörper in eine Schieberbaugruppe zur Aufnahme des Arbeitsschiebers und gegebenenfalls des Ausgleichsschiebers, eine Antriebsbaugruppe zur Aufnahme des Verstellmotors und der Getriebemittel und eine den Werkzeugschaft aufweisende Anschlußbaugruppe unterteilt ist, die an axialen Trennstellen lösbar miteinander verbunden sind. Die Schieberbaugruppe enthält dabei zweckmäßig eine Meßeinrichtung zur direkten Messung des Verstellwegs des Antriebsschiebers relativ zum Grundkörper. Weiter ist in der Schieberbaugruppe und/oder der Antriebsbaugruppe eine mit der Meßeinrichtung verbundene Meß- und Regelelektronik zur Ansteuerung des Verstellmotors angeordnet. In der Anschlußbaugruppe befindet sich eine Schnittstelle für eine induktive Stromversorgung oder Datenübertragung, während zusätzlich im Grundkörper, vorzugsweise im Bereich der Schieberbaugruppe eine Schnittstelle für eine galvanische Stromversorgung und Datenübertragung angeordnet sein kann.

Eine weitere bevorzugte Ausgestaltung der Erfindung sieht vor, daß der Verstellmotor mit seinem rotationssymmetrischen Motorgehäuse in einer zur Grundkörperachse konzentrischen Ausnehmung des Grundkörpers angeordnet ist, die einen durch das Motorgehäuse begrenzten, flüssigkeitsdichten, mit einem Kühlmittelstrom beaufschlagbaren Spaltraum für die Motorkühlung enthalten kann. Der den Spaltraum enthaltenden Teil der Ausnehmung ist zweckmäßig in der Anschlußbaugruppe angeordnet. Da auch im Bereich der Stromversorgungs- und Datenübertragungsschnittstelle thermische Energie abgeführt werden muß, ist es von Vorteil, wenn die Stromversorgungs- und Datenübertragungsschnittstelle in einem außenseitig breitflächig mit einem Kühlmittelstrom beaufschlagbaren Gehäuseteil der Anschlußbaugruppe angeordnet ist.

Zur Versorgung der Werkzeugaufnahme mit einem Kühlschmiermittel kann der Arbeitsschieber mit einer mit der Werkzeugaufnahme kommunizierenden, parallel zur Verstellrichtung des Arbeitsschiebers ausgerichteten Radialbohrung für den Anschluß an eine grundkörperfeste Kühlschmiermittelleitung versehen werden. Die grundkörperfeste Kühlschmiermittelleitung weist zu diesem Zweck ein in die Radialbohrung gleitend und flüssigkeitsdicht eingreifendes Steckrohr auf.

Um die Schieberbaugruppe gegen Schmutz- und Kühlschmiermittelzutritt abzudichten, weist sie ein über ein Deckelteil mit dem Grundkörper dreh- und verschiebefest verspanntes Mantelrohr auf.

Der erfindungsgemäße Werkzeugkopf wird mit Vorteil als Plandrehkopf oder Ausdrehkopf eingesetzt.

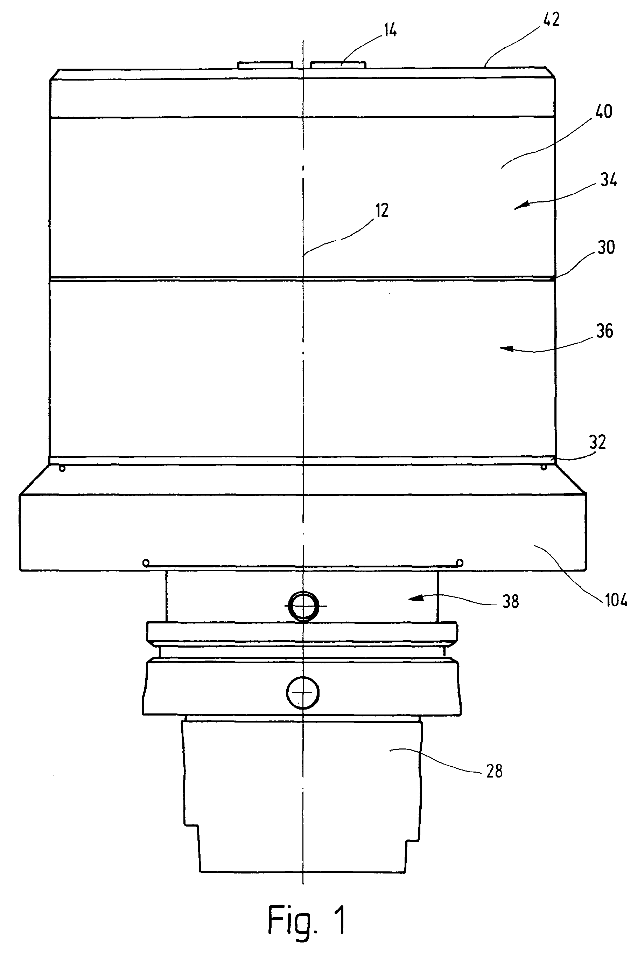

Im folgenden wird die Erfindung anhand eines in der Zeichnung in schematischer Weise dargestellten Ausführungsbeispiels näher erläutert. Es zeigen
- Fig. 1: eine Seitenansicht eines als Plandrehkopf ausgebildeten Werkzeugkopfs;

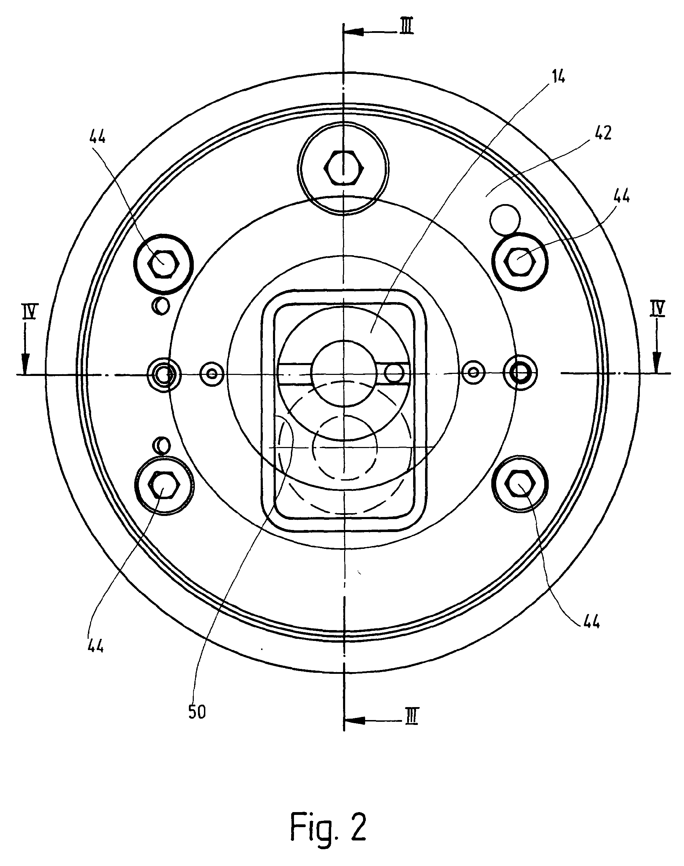

- Fig. 2: eine Draufsicht auf den Werkzeugkopf nach Fig. 1;
- Fig. 3: einen Schnitt entlang der Schnittlinie III-III der Fig. 2;
- Fig. 4: einen Schnitt entlang der Schnittlinie IV-IV der Fig. 2;

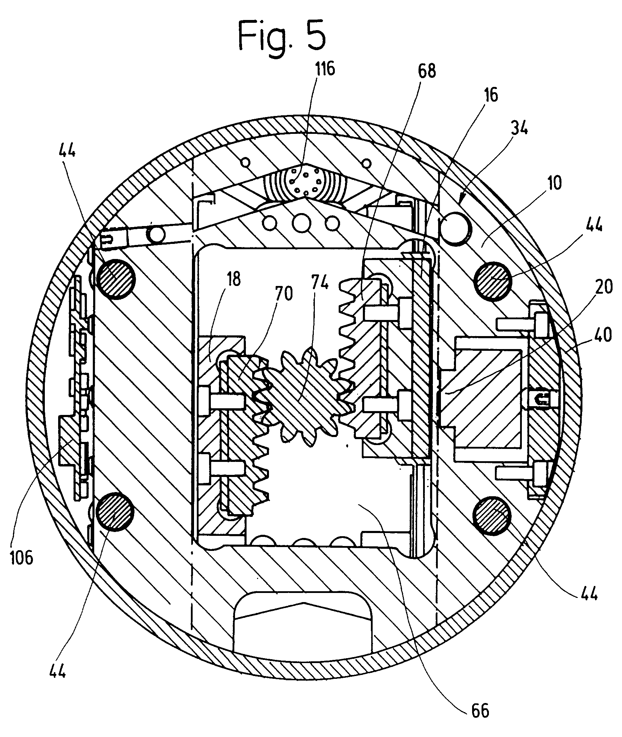

- Fig. 5: einen Schnitt entlang der Schnittlinie V-V der Fig. 4;

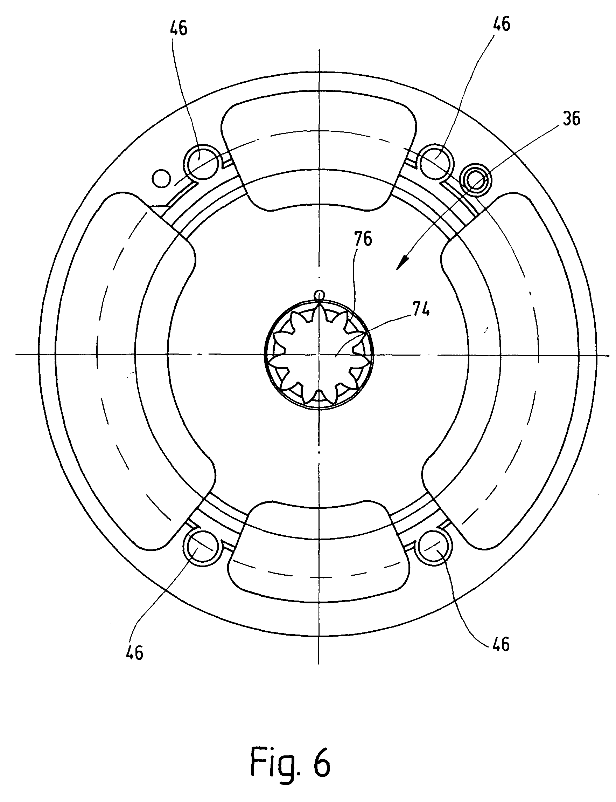

- Fig. 6: eine Draufsicht auf die Antriebsbaugruppe des Werkzeugkopfs bei abgenommener Schieberbaugruppe

Der in der Zeichnung dargestellte Werkzeugkopf ist als Plandrehkopf für den Einsatz in Werkzeugmaschinen bestimmt. Der Werkzeugkopf besteht im wesentlichen aus einem um eine Drehachse 12 drehbaren Grundkörper 10, einem im Grundkörper 10 quer zur Drehachse 12 verschiebbaren, eine Werkzeugaufnahme 14 für ein Schneidwerkzeug tragenden Arbeitsschieber 16, einem in entgegengesetzter Richtung des Arbeitsschiebers 16 im Grundkörper 10 verschiebbaren Ausgleichsschieber 18, einer Meßeinrichtung 20 zur direkten Verstellwegmessung des Arbeitsschiebers 16 relativ zum Grundkörper 10, einem unter Zwischenschaltung eines Untersetzungsgetriebes 22 auf den Arbeitsschieber 16 und den Ausgleichsschieber 18 einwirkenden elektrischen Verstellmotor 24, einer Stromversorgungseinrichtung 26 und einem axial über den Grundkörper 10 überstehenden Werkzeugschaft 28, der mit einer nicht dargestellten Maschinenspindel einer Werkzeugmaschine kuppelbar ist.

Der Werkzeugkopf ist aus drei an axialen Trennstellen 30,32 lösbar miteinander verbindbaren Baugruppen zusammengesetzt, einer den Arbeitsschieber 16 und den Ausgleichsschieber 18 aufnehmenden Schieberbaugruppe 34, einer den Verstellmotor 24 und das Untersetzungsgetriebe 22 enthaltenden Antriebsbaugruppe 36 und einer den Werkzeugschaft 28 und die Stromversorgungseinrichtung 26 enthaltenden Anschlußbaugruppe 38. Die Schieberbaugruppe 34 wird an ihrem Umfang von einem Mantelrohr 40 aus Metall oder Kunststoff umfaßt und stirnseitig durch ein Deckelteil 42 verschlossen.

Die Verbindung der Schieberbaugruppe 34 und der Antriebsbaugruppe 36 erfolgt mit Hilfe der achsparallelen Schrauben 44, die durch das Deckelteil 42 und nicht dargestellte Durchgangsöffnungen der Schieberbaugruppe 34 hindurch in Gewindebohrungen 46 der Antriebsbaugruppe 36 eingedreht sind. Die Anschlußbaugruppe 38 ist von der anderen Stirnseite her mittels Schrauben 48 an der Antriebsbaugruppe 36 angeschraubt.

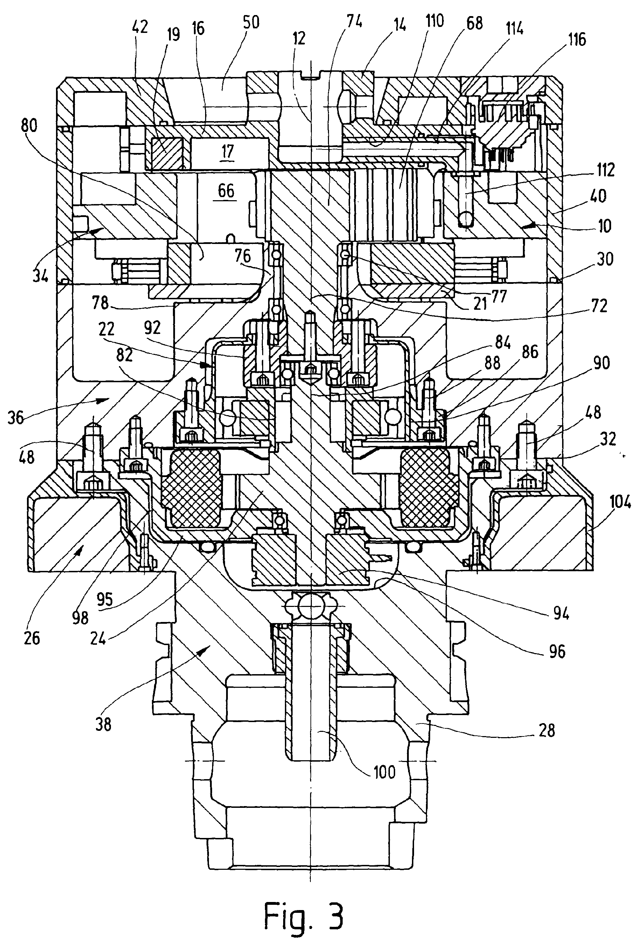

Der mit der Werkzeugaufnahme 14 durch ein Langloch 50 des Deckelteils 42 hindurchgreifende Arbeitsschieber 16 ist in einer grundkörperfesten prismenförmigen Wälzführung 52 in Verschieberichtung geführt. Die Wälzführung ist dabei mittels nicht dargestellter, gegen die grundkörperfesten Führungsprismen 54 andrückender Klemmkeile spielfrei gestellt. Da die Wälzführung 52 bei hohen Schneidkräften über die Werkzeugaufnahme 14 einer Momentenbelastung ausgesetzt ist, die zu einer Biegeverformung führen kann, ist zusätzlich eine bei Erreichen der elastischen Verformungsgrenze wirksam werdende Gleitführung 56 für den Arbeitsschieber 16 vorgesehen. Im unbelasteten Zustand bildet sich vor der Gleitführung 56 ein Freiraum 52 aus, in den hinein sich das arbeitsschieberfeste Führungsprisma 58 im Belastungszustand bis zur Anlage gegen die Gleitführung 56 elastisch verbiegen kann. Dies sorgt dafür, daß bei schwerer Zerspanung das Werkzeug über die Gleitführung 56 gedämpft und dadurch ein Rattern oder Vibrieren vermieden wird. Der Arbeitsschieber ist auf seiner einen Breitseite mit Hohlräumen 17 versehen. Aus Fig. 3 ist zu ersehen, daß der in größtem Abstand von der Werkzeugaufnahme 14 in Verschieberichtung angeordnete Hohlraum mit einem Schwermetall 19 ausgefüllt.

Der vorzugsweise aus einem Schwermetall bestehende Ausgleichsschieber 18 ist ebenfalls in einer grundkörperfesten Wälzführung 60, die nicht spielfrei gestellt sein muß, geführt. Auf seiner einen Breitseite ist der Ausgleichsschieber 18 mit einem abnehmbaren oder austauschbaren plattenförmigen Massenelement 21 bestückt, das für den Wuchtausgleich in seiner Masse durch Materialabtrag veränderbar ist.

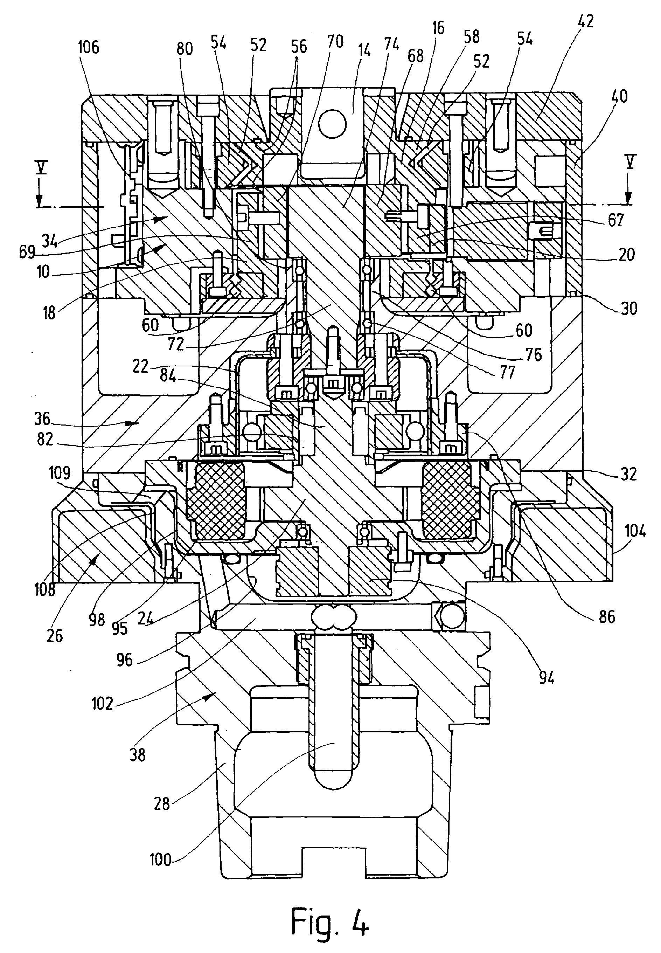

Der Arbeitsschieber 16 und der Ausgleichsschieber 18 sind in axialem Abstand voneinander angeordnet. Wie insbesondere aus Fig. 4 zu ersehen ist, weisen sie ein im wesentlichen L-förmiges Profil auf, wobei an den jeweils kurzen, in den Freiraum 66 eingreifenden Schenkeln 67,69 Zahnplatten 68,70 angeordnet sind, die mit einem auf der zur Drehachse 12 koaxialen Ausgangswelle 72 des Untersetzungsgetriebes 22 angeordneten Antriebsritzel 74 kämmen. Auf diese Weise werden der Arbeitsschieber 16 und der Ausgleichsschieber 18 bei drehendem Antriebsritzel 74 gegensinnig verschoben.

Die Ausgangswelle 72 ist in einer axial über die Antriebsbaugruppe 36 überstehenden Lagerhülse 76 mittels zweier Kugellager 77 gelagert. Sie greift zusammen mit der Lagerhülse durch eine Öffnung 78 in der Schieberbaugruppe 34 und durch ein Langloch 80 im Ausgleichsschieber 18 von der Seite der Antriebsbaugruppe 36 her ein.

Bei dem Untersetzungsgetriebe 22 handelt es sich um ein Harmonic-Drive-Getriebe, dessen ovale Antriebsscheibe 82 mit der zur Drehachse 12 koaxialen Abtriebswelle 84 des Verstellmotors 24 gekuppelt ist, dessen innenverzahnter Ring 86 mit Hilfe der Schrauben 88 mit dem Grundkörper 10 im Bereich der Antriebsbaugruppe 36 drehfest verbunden ist und dessen flexible außenverzahnte Hülse 90 über das Kupplungsstück 92 mit der Ausgangswelle 72 gekuppelt ist.

Der in Fig. 3 und 4 vereinfacht dargestellte, mit einem Drehgeber 94 bestückte Verstellmotor 24 steht mit seinem Motorgehäuse 95 über die Antriebsbaugruppe 36 axial über und greift dort in eine zur Drehachse 12 konzentrische topfartige Ausnehmung 96 der Anschlußbaugruppe 38 unter Freilassung eines Spaltraums 98 ein. Der Spaltraum 98 kommuniziert mit den Kanälen 100,102 der Anschlußbaugruppe 38 und ist über diese von der Werkzeugmaschine her mit einem Kühlmittel beaufschlagbar. Auf diese Weise kann die beim Betrieb des Verstellmotors anfallende Abwärme abgeführt werden.

Die Stromversorgungseinrichtung 26 weist ein an der Anschlußbaugruppe 38 angeordnetes Spulengehäuse 104 auf, in dem sich eine in einer mechanisch belastbaren Gußmasse aus Kunststoff oder Kunstharz eingebettete Sekundärspule mit zugehöriger Stabilisierungselektronik befindet.

Die Sekundärspule ist Bestandteil einer induktiven Übertragungsstrecke der Stromversorgungseinrichtung 26, die für die Stromversorgung des Verstellmotors 24 und der im Werkzeugkopf enthaltenen Elektronikschaltungen 106 sorgt. Weiter dient die Induktionsstrecke zur bidirektionalen Datenübertragung, wobei die Datensignale dem Induktionsstrom aufmoduliert werden. Die nicht dargestellte Primärspule der Stromversorgungseinrichtung 26 ist in einem maschinenseitigen Spulengehäuse angeordnet, das radial außerhalb des Werkzeugschaftes 28 in einen freien Zwischenraum zwischen der Stirnfläche einer Maschinenspindel und der Stirnfläche des werkzeugkopfseitigen Spulengehäuses 104 eingreift. Auf der Außenseite des Spulengehäuses 104 befindet sich ein Spaltraum 108, der über Kanäle 109 mit dem motorseitigen Spaltraum 98 kommuniziert und dadurch mit Kühlmittel beaufschlagbar ist. Auf diese Weise kann die in der Sekundärspule der Stromversorgungseinrichtung 26 entstehende Abwärme nach außen abgeführt werden.

Ein Teil des über die Kanäle 100,102 zugeführten Kühlschmiermittels wird innerhalb des Grundkörpers 10 der Werkzeugaufnahme 14 und über diese dem nicht dargestellten Schneidenträger zugeführt. Zu diesem Zweck weist der Arbeitsschieber 16 eine parallel zu seiner Verschieberichtung ausgerichtete, bis zur Werkzeugaufnahme 14 reichende Radialbohrung 110 auf, in die ein mit den grundkörperseitigen Kühlmittelkanälen 112 kommunizierendes Steckrohr 114 gleitend und flüssigkeitsdicht eingreift.

Im Bereich der Schieberbaugruppe befindet sich zusätzlich eine Schnittstelle mit einer Steckerbuchse 116 für die galvanische Stromversorgung und Datenübertragung.

Zusammenfassend ist folgendes festzuhalten: Die Erfindung bezieht sich auf einen Werkzeugkopf für den Einsatz in Werkzeugmaschinen. Der Werkzeugkopf weist einen Grundkörper 10, einen axial über den Grundkörper 10 überstehenden, mit einer Maschinenspindel kuppelbaren Werkzeugschaft 28, mindestens einen im wesentlichen quer zur Grundkörperachse verstellbaren, eine stirnseitig überstehende Werkzeugaufnahme aufweisenden Arbeitsschieber 16 und einen im Grundkörper angeordneten, über Getriebemittel 22 in Verstellrichtung auf den Arbeitsschieber 16 einwirkenden Verstellmotor 24 auf. Um auch bei hohen Belastungsspitzen einen vibrationsfreien Betrieb zu gewährleisten, wird gemäß der Erfindung vorgeschlagen, daß der Arbeitsschieber 16 in einer grundkörperfesten, spielfrei gestellten Wälzführung 52,54,58 geführt ist, daß die Wälzführung begrenzt elastisch verformbar ist und daß zusätzlich eine bei Erreichen der elastischen Verformungsgrenze wirksam werdende Gleitführung 56 für den Arbeitsschieber 16 vorgesehen ist.

## Patentansprüche

1. Werkzeugkopf für den Einsatz in Werkzeugmaschinen, mit einem Grundkörper (10), mit einem axial über den Grundkörper (10) überstehenden, mit einer Maschinenspindel kuppelbaren Werkzeugschaft (28), mit mindestens einem im wesentlichen quer zur Grundkörperachse (12) verstellbaren, eine stirnseitige Werkzeugaufnahme (14) aufweisenden Arbeitsschieber (16) und mit einem im Grundkörper (10) angeordneten, über Getriebemittel (22) in Verstellrichtung auf den Arbeitsschieber (16) einwirkenden Verstellmotor (24), **dadurch gekennzeichnet, daß** der Arbeitsschieber (16) in einer grundkörperfesten, spielfrei gestellten, vorzugsweise prismenförmigen Wälzführung (52,54,58) geführt ist, daß die Wälzführung begrenzt elastisch verformbar ist und daß zusätzlich eine bei Erreichen der elastischen Verformungsgrenze wirksam werdende Gleitführung (56) für den Arbeitsschieber (16) vorgesehen ist.

2. Werkzeugkopf nach Anspruch 1, **gekennzeichnet durch** einen im Grundkörper (10) angeordneten Ausgleichsschieber (18) , der in einer grundkörperfesten Wälzführung (60) geführt ist.

3. Werkzeugkopf nach Anspruch 1 oder 2, **gekennzeichnet durch** eine Schieberbaugruppe (34) zur Aufnahme des Arbeitsschiebers und gegebenenfalls des Ausgleichsschiebers, eine Antriebsbaugruppe (36) zur Aufnahme des Verstellmotors (24) und der Getriebemittel (22) und eine den Werkzeugschaft aufweisende Anschlußbaugruppe (38), die an axialen Trennstellen (30,32) lösbar miteinander verbunden sind.

4. Werkzeugkopf nach Anspruch 3, **dadurch gekennzeichnet, daß** die Schieberbaugruppe (34) eine Meßeinrichtung (20) zur direkten Messung des Verstellwegs des Arbeitsschiebers (16) relativ zum Grundkörper (10) enthält.

5. Werkzeugkopf nach Anspruch 4, **dadurch gekennzeichnet, daß** die Schieberbaugruppe und/oder die Antriebsbaugruppe eine mit der Meßeinrichtung (20) verbundene Meß- und Regelelektronik (106) zur Ansteuerung des Verstellmotors (24) enthält.

6. Werkzeugkopf nach einem der Ansprüche 1 bis 5, **dadurch gekennzeichnet, daß** die Anschlußbaugruppe (38) eine Schnittstelle (26,104) für eine induktive Stromversorgung und Datenübertragung enthält.

7. Werkzeugkopf nach einem der Ansprüche 1 bis 6, **dadurch gekennzeichnet, daß** der Verstellmotor (24) mit seinem rotationssymmetrischen Motorgehäuse (95) in einer zur Grundkörperachse konzentrischen Ausnehmung (96) des Grundkörpers unter Freilassung eines mit einem Kühlmittel beaufschlagbaren Spaltraums (98) für die Motorkühlung angeordnet ist.

8. Werkzeugkopf nach Anspruch 7, **dadurch gekennzeichnet, daß** der den Spaltraum (98) enthaltende Teil der Ausnehmung (96) in einer Anschlußbaugruppe (38) angeordnet ist.

9. Werkzeugkopf nach einem der Ansprüche 5 bis 8, **dadurch gekennzeichnet, daß** die Stromversorgungsschnittstelle (26,104) in einem außenseitig über einen Spaltraum (108) mit einem Kühlmittel beaufschlagbaren Gehäuse (104) angeordnet ist.

10. Werkzeugkopf nach einem der Ansprüche 3 bis 9, **dadurch gekennzeichnet, daß** die Antriebsbaugruppe (36) mit einer axial überstehenden Lagerhülse (76) für die Ausgangswelle (72) in eine axial offene Ausnehmung (78) der Schieberbaugruppe (34) eingreift.

11. Werkzeugkopf nach Anspruch 10, **dadurch gekennzeichnet, daß** die Lagerhülse (76) in ein Langloch (80) des Ausgleichsschiebers (18) eingreift.

12. Werkzeugkopf nach einem der Ansprüche 1 bis 11, **dadurch gekennzeichnet, daß** die Getriebemittel eine konzentrisch zur Grundkörperachse (12) drehbare Ausgangswelle (72) aufweisen, die ein mit einer arbeitsschieberseitigen, vorzugsweise arbeitsschieberfesten Verzahnung (68) kämmendes Antriebsritzel (74) trägt und daß die arbeitsschieberfeste Zahnplatte (68) oder das Antriebsritzel (74) in zwei axial getrennte, relativ zueinander verschieb- oder verdrehbare und starr miteinander verbindbare Verzahnungsteile unterteilt ist.

13. Werkzeugkopf nach einem der Ansprüche 1 bis 12, **dadurch gekennzeichnet, daß** der Arbeitsschieber (16) eine mit der Werkzeugaufnahme (14) kommunizierende, parallel zur Verstellrichtung ausgerichtete Radialbohrung (110) für den Anschluß an eine grundkörperfeste Kühlmittelleitung (112) aufweist.

14. Werkzeugkopf nach Anspruch 13, **dadurch gekennzeichnet, daß** die grundkörperfeste Kühlmittelleitung (112) ein in die Radialbohrung (110) gleitend und flüssigkeitsdicht eingreifendes Steckrohr (114) aufweist.

15. Werkzeugkopf nach einem der Ansprüche 3 bis 14, **dadurch gekennzeichnet, daß** die Schieberbaugruppe ein über ein Deckelteil (42) mit dem Grundkörper (10) dreh- und verschiebefest verspanntes Mantelrohr (40) aufweist.

16. Werkzeugkopf nach einem der Ansprüche 3 bis 15, **dadurch gekennzeichnet, daß** der Grundkörper (10) vorzugsweise im Bereich der Schieberbaugruppe (34) eine Schnittstelle (116) für eine galvanische Stromversorgung und Datenübertragung aufweist.
